# EUROPÄISCHE PATENTSCHRIFT

(11) **EP 1 699 238 B1**
(45) Veröffentlichungstag und Bekanntmachung des Hinweises auf die Patenterteilung: **27.05.2009**
(21) Anmeldenummer: 06001363.8
(22) Anmeldetag: 23.01.2006
(51) Int. Cl.: H04N 7/14, A47B 37/00, A47B 87/00

(54) **Verkabelung von Vielzweckmöbeln**
Wiring of multi purpose furniture
Cablage de mobilier multifonctionnel

(30) Priorität: 25.01.2005 DE 102005003564
(43) Veröffentlichungstag der Anmeldung: 06.09.2006
(73) Patentinhaber: Rosenthal AG, 95100 Selb (DE)
(72) Erfinder: Buhlinger, Hans Peter, 76199 Karlsruhe (DE); Kühn, Daniel, 32351 Stemwede-Hollwede (DE)
(74) Vertreter: Holland, Ralf

(56) Entgegenhaltungen:
- WO-A-03/079674
- DE-A-5102004 052 21
- US-A1- 2004 097 135

## Beschreibung

Die Erfindung betrifft die Verkabelung von Vielzweckmöbeln und stellt hierfür ein Verfahren und die Möbel selbst zur Verfügung.

An Vielzweckmöbel, insbesondere Konferenztische, werden zunehmend erhöhte funktionelle Anforderungen gestellt. So ist nicht nur eine Anshlussmöglichkeit für bspw. einen Laptop für eine Präsentation mittels eines Beamers regelmäßig gewünscht, sondern auch häufig der Zugang zu Computernetzwerken, sei es ein LAN, ein Local Area Network, oder ein WAN, ein Wide Area Network wie das Internet. Neben den typischen Verbindungen des Computerzeitalters werden darüber hinaus Telefonkommunikation bspw. via ISDN als selbstverständlich und, zunehmend die Einbindung von Bild- und Tonsignalen bspw. einer Videokonferenzschaltung gewünscht.

Aus der US 2004/0097135 ist ein solcher, mit weiteren Tischen kombinierbarer Arbeitsplatz nach Art eines Computertisches bekannt. Jeder Tisch verfügt über ein eigenes Energieverteilungssystem, das stirnseitig des Tischs mit dem eines weiteren Tischs kombinierbar ist. Des weiteren sind Netzwerkverbindungen für beispielsweise Internet, Intranet, den Zugang zu einer oder mehrerer Datenbanken, Audio- und Videosysteme, Fax oder dergleichen vorgesehen, die gleichfalls von Tisch zu Tisch verkabelt werden können.

Eine derartige Verkabelung widerspricht jedoch den modernen Anforderungen an die örtliche Flexibilität eines Arbeitsplatzes und ist insbesondere eine Variation der Anzahl der Arbeitsplätze mit hohem Arbeitsaufwand verbunden, da die Verkabelung von einem Laien in der Regel nicht mehr vorgenommen werden kann, sondern ein Fachmann wie ein Kommunikations- oder Computertechniker regelmäßig herangezogen werden muß.

Diese technische Problematik stellt sich insbesondere bei höherwertigen Konferenztischen, die neben den hohen technischen Anforderungen darüber hinausgehend den Anspruch aufweisen, höchsten designerischen Ansprüchen zu genügen und sehr flexibel Verwendung finden sollen. Diesem widersprechen die bisherigen, aufwendigen Verkabelung generell.

Vor diesem Hintergrund macht die Erfindung es sich zur Aufgabe, Vielzweckmöbel, insbesondere Konferenztische und ein Verfahren für deren Verkabelung zur Verfügung zu stellen, durch die die Flexibilität des Einsatzes derartiger Möbel deutlich erhöht wird und durch die eine elektrische/elektronische Verbindung insbesondere zwischen zwei und mehr Möbeln ohne Werkzeuge und in einfacher Weise, auch für einen Laien, zu bewerkstelligen ist, wobei die Zahl der Verbindungen gegenüber dem Stand der Technik deutlich reduziert ist.

Insbesondere soll durch die Erfindung ferner die technische Leistungsfähigkeit auf höchstem Niveau sichergestellt werden, wobei sich die Funktionalität der verwendeten und angebotenen Technik einem Benutzer weitestgehend von selbst erschließen soll, jedoch diese Technik das Design des bzw. der Möbel in keinster Weise beeinträchtigt.

Auf der Grundlage digitalisierter Signale, auch digitaler Audio- und Videosignale, wird diese technische Problematik zum einen durch ein Verfahren gemäß des Anspruchs 1 gelöst

Infolge dieser Maßnahmen ist die Anzahl der die Möbel verbindenden Kabel deutlich reduziert, nämlich auf lediglich zwei datenübertragende Kabel, über die sämtliche Informationssignale übertragen werden. Darüber hinaus entfällt ein aufwendiges sternförmiges Verkabeln eines jeden Möbels mit zentralen Servern. Vielmehr ist es durch das Verfahren nach der Erfindung ermöglicht, gleichsam die den einzelnen Möbeln eigene Technik in Reihe zu schalten, womit ein hohes Maß an Flexibilität gegeben ist, da das herauslösen oder hinzufügen einzelner Möbel kaum Aufwand erfordert.

Daneben ist an jedem Arbeitaplatz eine Stromversorgung aus einem typischen Haushaltsnetz äußerst zweckmäßig, weshalb zwischen den Möbeln drei betriebsmäßig lösbare Kabel für den ersten und den zweiten Bus sowie eine Stromversorgung vorgesehen sind. Vorzugsweise durch Steckerverbinder ausgebildete Anschlüsse an den Möbeln erlauben eine schnelle Trennung von Möbeln wie auch eine schnelle Einbindung weiterer Möbel in das System, auch durch einen Laien, wenn bspw. die Kabel oder die Steckerverbinder unverwechselbare Anschlüsse sicherstellen.

Um bspw. einem Konferenzteilnehmer den Anschluß seines mitgebrachten Notebooks, Laptops oder dergleichen zu ermöglichen, ist weiter vorgesehen, dass ein Möbel mit einem Steckfeld mit einer Steuervorrichtung versehen ist, in der die Audio-, die Video-, die Computernetzwerk- sowie die VGA-Signale für einen Abgriff an dem Steckfeld decodiert oder geschaltet werden. Der Konferenzteilnehmer hat dann lediglich noch sein Gerät entsprechend anzuschließen, womit ihm dann sämtliche angebotene Dienste zur Verfügung stehen, bspw. ein in die Technik eingebundener Beamer für eine Präsentation, ein Zugang zu internen Datenbanken, ein Zugang in das Internet oder dergleichen mehr.

Insbesondere um solche externen Dienste zur Verfügung stellen zu können, ist weiter vorgesehen, dass ein und insbesondere nur ein erstes Möbel mit Anschlüssen für Audio-, Video-, Computernetzwerk- und VGA-Signale an externe Einrichtungen versehen ist, dass ein Einspeisen oder ein Ausgang der Audiosignale über einen Audio Splitter erfolgt, dass ein Einspeisen oder ein Ausgang der VGA- und/oder der Videosignale über einen Seriell Manager erfolgt und dass an dem Seriell Manager eine Tastatur für eine Steuerung des Systems angeschlossen ist. Damit stellt sich die Erfindung nicht nur als reine Insellösung dar, die in sich abgeschlossen die bspw. für eine Konferenz nötige Technik zur Verfügung stellt, sondern ist der Zugang für eine Vielzahl von Arbeitsplätzen zu allen angebotenen Diensten über nur einen zentralen Anschluß des ersten Möbels an Server ermöglicht.

Durch die Erfindung werden gemäß des Anspruchs 5 weiter kombinierbare Vielzweckmöbel zur Verfügung gestellt, insbesondere Konferenztische.

An zwei benachbarten Möbelseiten, vorzugsweise zwei benachbarten Stirnseiten bspw. zweier Konferenztische, ist jeweils ein Tischverbindungsmodul vorgesehen, an welchen Tischverbindungsmodulen betriebsmäßig lösbare Kabel angeschlossen sind für eine serielle Übertragung von Audio- und/oder Computernetzwerksignalen über ein erstes Kabel und von VGA- und/oder von Videosignalen über ein zweites Kabel zwischen zwei Möbeln. Bei enger Nachbarschaft der Möbel, insbesondere bei einem Nebeneinander bspw. zweier Konferenztische, ist eine kurze Kabelverbindung zwischen den beiden Tischverbindungsmodulen für eine Datenübertragung nur nötig und insbesondere nur zwei normal erhältliche Standart-Kabel, bspw. Patchkabel der Kategorie 5 für die Übertragung der VGA- und Videosignale und der Kategorie 6 für die Übertragung der Audio- und Computernetzwerksignale.

Zweckmäßigerweise ist weiter an den Tischverbindungsmodulen ein betriebsmäßig lösbares Kabel für eine Stromversorgung vorgesehen, so dass an und für ein jedes Möbel auch eine Stromversorgung sichergestellt ist, wodurch die Anzahl der für eine Verkabelung benötigten letztlich auf nur drei Kabel beschränkt wird.

Darüber hinaus kann in einfacher Weise noch vorgesehen sein, dass die Kabel zu einem Kabelbaum zusammengefasst sind, womit einfache Vorhaltung und Verwendung sichergestellt sind.

Da vorzugsweise drei unterschiedliche Kabel Verwendung finden, ist es zweckmäßig, wenn die Kabel über Steckerverbinder an den Tischverbindungsmodulen angeschlossen sind, die unverwechselbar ausgebildet sind. Infolge dieser Maßnahme sind Fachkenntnisse der Telekommunikation oder Computerwissen für einen Umbau bspw. einer Konferenztischanlage durch Hinzufügen oder Entfernen einzelner Tische nicht notwendig, sondern ist dies auch für einen Laien auf diesen Gebieten, bspw. einem Hausmeister, leicht unter Wahrung der technischen Funktion der Konferenztischanlage möglich.

Alternativ oder zusätzlich kann auch daran gedacht sein, dass durch unterschiedliche Kabellängen ein unverwechselbarer Anschluß der Kabel erfolgt.

Konferenztischanlagen bestehen regelmäßig aus einer Aneinanderreihung einer Vielzahl von im Wesentlichen gleichartigen, einzelnen Konferenztischen. Dabei sind kreisförmige, hufeisenförmige oder T-förmige Anordnungen nur beispielhaft genannt. Sollen die vielen für derartige Anordnungen nötigen einzelnen Konferenztische miteinander verschaltet werden, ist es von Vorteil, wenn an zwei gegenüberliegenden Möbelseiten, bspw. Stirnseiten und/oder zwei Tischanschlussseite eines Möbels ein Tischverbindungsmodul jeweils vorgesehen ist. Auch wenn der ein oder andere Tisch nicht über weitergehende Technik verfügt, ist damit gleichsam ein in Reihe Schalten der Konferenztische ohne aufwendige Verkabelung möglich wie auch das Hinzufügen, das Entfernen oder der Austausch einzelner Tische.

Um die gebotene Technik einem Benutzer zugänglich zu machen, ist ein Steckfeld für einen Abgriff der von dem Möbel eigenen Decodern und/oder Schaltern decodierten und/oder geschalteten Audio-, Video- und Computernetzwerk- und VGA-Signale vorgesehen, das zumindest bei Nichtgebrauch unterhalb einer Tischplatte versenkt angeordnet ist. Das Steckfeld wird für den Anschluß von Notebooks, Laptops oder dergleichen über die üblichen Steckerverbinder verfügen. Um jedoch über das Steckfeld Signale in das System ein- bzw. auszuschleusen, ist deren Decodierung bzw. für die serielle Übertragung ein entsprechendes Schalten, Switchen, nötig, welche Technik von möbeleigenen Decodern und/oder Schalter einer Steuervorrichtung eines jeden mit einem Steckfeld versehenen Möbels geleistet wird. Darüber hinaus ist zumindest bei Nichtgebrauch das Steckfeld unterhalb der Tisch- oder Arbeitsplatte versenkt angeordnet. Damit wird die Anmutung des Möbels nicht beeinträchtigt, vielmehr ordnet sich die Technik dem Design unter.

Insbesondere Konferenztische weisen eine Größe auf, die zumeist wenigstens zwei Nutzern Arbeitsplatz bieten. Von daher wird regelmäßig vorgesehen sein, dass das Steckfeld wenigstens ein Paar von Anschlüssen für jedes Signal aufweist, mithin beiden Nutzern gleichwertige Arbeitsplätze zur Verfügung gestellt werden. Ferner kann, auch hier wieder dem Prinzip treu bleibend, dass sich die Technik dem Design unterzuordnen hat, das Steckfeld wenigstens einen Anschluß für eine Stromversorgung aufweisen, so dass seitlich oder unter der Tischplatte angeordnete Steckdosen vermieden werden können.

Auch das Steckfeld selbst soll, neben seiner technischen Aufgabe, sich dem Design unterordnen bzw. höchsten Designansprüchen genügen. Es ist deshalb vorgesehen, dass das Steckfeld aus einem Glas oder einem klarsichtigen Kunststoff ist. Beide Materialien, vorzugsweise jedoch Glas, bieten eine Vielzahl von Optionen. Neben ihren klassischen Nichtleitereigenschaften stehen hier die optischen Eigenschaften im Vordergrund. So können, sehr anspruchsvoll, wenigstens die Anschlüsse des Steckfelds eine Beschriftung aufweisen, wobei die Beschriftung bevorzugt eine Laserinnengravur ist. In Verbindung mit einer Beleuchtung des Steckfeldes, bevorzugt von randseitig verdeckt angeordneten LED's von bspw. blauer Farbe, wird ein Steckfeld zur Verfügung gestellt, dass sowohl höchsten technischen als auch designerischen Ansprüchen genügt

In einer ersten Variante kann weiter vorgesehen sein, dass das Steckfeld in einer Nichtgebrauchslage unterhalb einer verschwenkbaren, eine Ausnehmung in einer Tischplatte schließenden Platte angebunden ist und mit der Platte aus der Nichtgebrauchslage unterhalb der Tischplatte in eine Gebrauchslage oberhalb derselben verschwenkbar ist. In der Nichtgebrauchslage wird die Platte die Ausnehmung kaum auffallen verschließen, wozu die Platte die gleiche Oberflächenstrukturierung aufweist wie die Tischplatte selbst. In an sich bekannter Weise wird durch ein leichtes Niederdrücken der Platte die Schwenkbewegung ausgelöst und steht das Steckfeld nach Beendigung der Schwenkbewegung und zweckmäßigerweise leichtem Einrasten oder in einer Todpunktlage für den Gebrauch zur Verfügung. Entsprechend erfolgt das Schließen der Klappe in einer umgekehrten Reihenfolge.

Alternativ kann vorgesehen sein, dass das Steckfeld in einer Nichtgebrauchslage unterhalb einer verschwenkbaren, eine Ausnehmung in einer Tischplatte verschließenden Platte angeordnet und nach Öffnen der Platte zugänglich ist. Dabei ist weiter von Vorteil, wenn die Platte die Ausnehmung bis auf einen Spalt verschließt und der Spalt von plattenfesten Borsten geschlossen wird. Durch den von den Borsten geschlossenen Spalt können auch bei geschlossener Platte problemlos Kabel zwischen der Steckplatte und einem Notebook, einem Laptop oder dergleichen geführt werden, so dass eine Tischoberfläche nicht durch aufgesetzte Technik gestört wird.

Unabhängig von der Positionierung des Steckfeldes in seiner Arbeitsstellung kann dieses gegenüber der Tischebene angestellt sein, bspw. unter einem Winkel von etwa 25° bis 50°, so dass es bequem auch im Sitzen nutzbar ist.

Es kann weiter von dem Steckfeld abgesetzt, unterhalb der Tischplatte eine Technikbox zur Aufnahme der möbeleigenen Decoder und/oder Schalter der Steuervorrichtung vorgesehen sein. Aufgrund dieser Maßnahmen kann das Steckfeld auf einem vergleichsweise klein gehaltenen, nur die interne Steckfeldverkabelung aufnehmenden Gehäuse aufgesetzt werden. Die weiter benötigte Technik wird abgesetzt in der modulartig ausgebildeten Technikbox zur Verfügung gestellt.

Dabei wird durch eine möbelfeste Verkabelung zwischen den Tischanschlussmodulen unter Einbindung der Technikbox wie auch durch eine möbelfeste Verkabelung zwischen der Technikbox und dem Steckfeld die Funktion sichergestellt. Sollte es jedoch zu einem Ausfall kommen, kann jedes der Bauteile in einfacher Weise auch von einem Laien ausgetauscht werden, wenn die möbelfesten Verkabelungen wenigstens einerends mit betriebsmäßig lösbaren Steckerverbindern versehen sind..

Für die Anbindung des erfindungsgemäßen Systems an die von einem Haus zur Verfügung gestellten Dienste ist ein und nur ein erstes Möbel bspw. einer Konferenztischanlage vorgesehen, das ein Verbindungsmodul aufweist für einen Anschluß an ein externes Computernetz und bei dem ein Audio Splitter vorgesehen ist für das Einspeisen externer und/oder den Ausgang interner Audiosignale. Daneben ist das Verbindungsmodul an einen Seriell Manager mit einem Anschluß für das Einspeisen externer und/oder den Ausgang interner Signale angeschlossen, wobei der Seriell Manager die VGA-Signale und/oder die Videosignale verwaltet und ist für die Steuerung an den Seriell Manager eine Tastatur angeschlossen, vorzugsweise eine Funktastatur, so dass auch hier höchste Mobilität garantiert ist.

Letztlich sollte das Verbindungsmodul einen Stromversorgungsanschluß aufweisen, so dass nur dieses eine Möbel gleichsam mit der Außenwelt zu verkabeln ist.

Die Erfindung wird anhand der schematischen Darstellungen in der Zeichnung weiter erläutert, die lediglich beispielhaft sind. In der Zeichnung zeigt:
- Fig. 1:: eine prinzipielle Darstellung der seriellen Schaltung einer Vielzahl von Steckfeldern,
- Fig. 2:: die Verschaltung zweier Möbel,
- Fig. 3:: eine Frontansicht eines Steckfeldes,
- Fig. 4:: eine Seitenansicht des Steckfeldes nach Fig. 3 in einer teilweise geschnittenen Darstellung und
- Fig. 5:: eine Einbauvariante eines Steckfeldes.

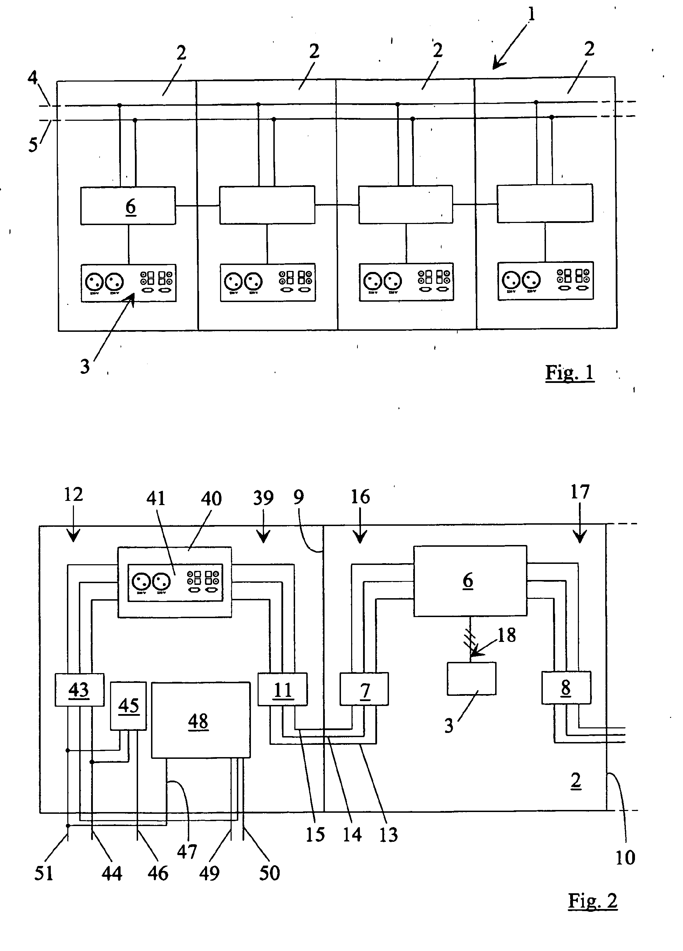

In Fig. 1 ist eine Konferenztischanordnung 1 mit einer Vielzahl aneinander gereihter, gleichartiger Tische 2 angedeutet. Jeder Tisch 2 verfügt über ein Steckfeld 3, über das ein Zugriff auf unterschiedliche Dienste bspw. mittels eines Notebooks oder Laptops ermöglicht ist. Um eine aufwendige sternförmige Verkabelung der einzelnen Tische 2 mit einem Server, einer Telefonanlage oder dergleichen zu vermeiden, erfolgt eine serielle Aufbereitung und die Übertragung von Audio- sowie Computernetzwerksignalen über einen ersten Bus 4 und hiervon unabhängig von VGA- und Videosignale über einen zweiten Bus 5 von Tisch zu Tisch. Um die decodierten Signale zu decodieren bzw. die seriellen Signale zu Schalten, ist abgesetzt von dem Steckfeld 3 jedem Tisch 2 eine eine Steuervorrichtung aufnehmende Technikbox 6 noch zugeordnet, die über entsprechende Decoder und Schalter verfügt. Fig. 1 läßt erkennen, dass durch einfaches Lösen einer Technikbox 6 von dem Bus 4 und dem Bus 5 ein Tisch 2 aus der Konferenztischanordnung 1 entfernt bzw. durch einfaches Verbinden der Technikbox 6 mit dem Bus 4 und dem Bus 5 ein Tisch hinzugefügt werden kann.

In der technischen Ausgestaltung ist dazu vorgesehen, dass für jeden Tisch 2, vgl. Fig. 2, zwei gleichartige Tischverbindungsmodule 7,8 vorgesehen sind, vorzugsweise an gegenüberliegenden Möbelseiten 9, 10, insbesondere an den zusammenzustellenden Stirnseiten eines Konferenztischs, gegebenenfalls aber auch an Tischanschlussseiten über Eck , bspw. für L-förmige oder U-förmige Konferenztischanordnungen. Damit liegen Tischverbindungsmodule 7,11 nebeneinander angeordneter Tische 2,12 unmittelbar benachbart und können mit kurzen Kabeln 13 bis 15 verbunden werden.

Ein erstes Kabel 13, bspw. ein Patchkabel der Kategorie 6, dient der Übertragung der Audio- und/oder der Computernetzwerksignale und stellt damit den Bus 4 dar. Ein zweites Kabel 14, bspw. der Kategorie 5, dient der Übertragung der VGA- und/oder der Videosignale und stellt damit den Bus 5 dar.

Ein drittes Kabel 15 dient bei dem Ausführungsbeispiel einer Stromversorgung.

Die Kabel 13 bis 15, die zu einem Kabelbaum auch zusammengefaßt sein können, sind betriebsmäßig, insbesondere ohne Werkzeug, von den Tischverbindungsmodulen 7 und 11 lösbar. Zweckmäßigerweise erfolgt der Anschluß der verschiedenen Kabel 13 bis 15 über unverwechselbar ausgebildete Steckerverbindungen, so dass für eine korrekte Verbindung kein Fachwissen von Nöten ist. Alternativ oder zusätzlich kann eine solche Unverwechselbarkeit durch unterschiedliche Längen der Kabel 13 bis 15 erreicht werden.

Es kann jedoch auch zweckmäßig sein, für den Bus 4 und den Bus 5 identische Kabel 13,14 zur Verfügung zu stellen, so dass eine Verwechselung der Kabel 13,14 bedeutungslos ist. Das Kabel 15 für die Stromversorgung kann sicher von derartigen Daten übertragenden Kabeln 13,14 unterschieden werden.

Von den Tischverbindungsmodulen 7,8 des Tischs 2 führen tischfeste Verkabelungen 16,17 zu der Technikbox 6, wobei auch hier wieder betriebsmäßig lösbare Verbindungen der Verkabelungen 16,17 mit den Tischverbindungsmodulen 7,8 bzw. der Technikbox 6 vorgesehen sein können, so dass ein Austausch derselben unproblematisch möglich ist und darüber hinaus auch wieder von einem Laien vorgenommen werden kann, wenn die Anschlüsse eindeutig sind, bspw. durch unverwechselbare Steckerverbindungen ausgebildet werden.

Die in der Technikbox 6 zusammengefassten Decoder und Schalter der Steuervorrichtung bereiten die Signale derart auf, dass sie über eine tischfeste Verkabelung 18, entsprechend den Verkabelungen 16,17 wenigstens einseitig betriebsmäßig lösbar, an dem Steckfeld 3 abgegriffen bzw. eingespeist werden können.

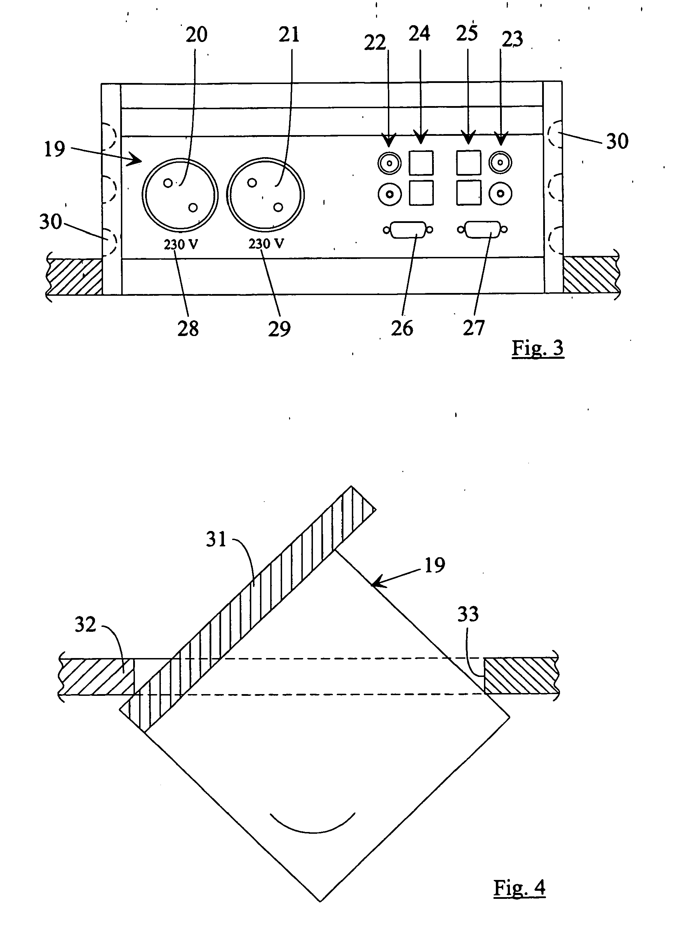

Das in Fig. 3 wiedergegebene Steckfeld 19 ist für zwei Nutzer ausgelegt und weist demzufolge zwei Steckdosen 20,21 für eine Stromversorgung und jeweils zweifach Anschlüsse 22,23 für Audiosignale, Anschlüsse 24,25 für Computernetzwerke, WAN und LAN, und Anschlüsse 26,27 für VGA-Signale auf. Ein Anschluß für Videosignale kann, je nach Art der Belegung und Ausbildung über die VGA-Anschlüsse 26,27 oder gegebenenfalls über weiter vorzusehende Anschlüsse erfolgen.

Die Anschlüsse 20 bis 27 sind vorzugsweise alle mit einer kennzeichnenden Beschriftung 28,29 versehen, so dass sich das Steckfeld 19 einem Nutzer unmittelbar erschließt und eine Einweisung oder dergleichen nicht erforderlich ist. Ist, wie bevorzugt, das Steckfeld aus einem Glas, kann die Beschriftung 28,29, sehr hochwertig, eine Laserinnengravur sein.

Insbesondere in Verbindung mit dem Material Glas ergibt sich bei einer Beleuchtung das Steckfeld 19 mit seitlich angeordneten, verdeckten LED's 30 bspw. blauer Farbe ein äußerst gefälliges Design.

Das Steckfeld 19 ist unter einer Platte 31 angebunden und mit dieser verschwenkbar. Bei Nichtgebrauch erfolgt ein Verschwenken des Steckfeldes 19 in eine Nichtgebrauchslage unterhalb einer Tischplatte 32 und wird eine Ausnehmung 32 in derselben von der Platte 31 möglichst passgenau geschlossen, vgl. Fig. 4. Um den optischen Eindruck einer durchgängigen Tischplatte 32 zu erzielen, werden die Platte 31 und die Tischplatte 32 gleichartige Oberflächenstrukturierungen noch aufweisen.

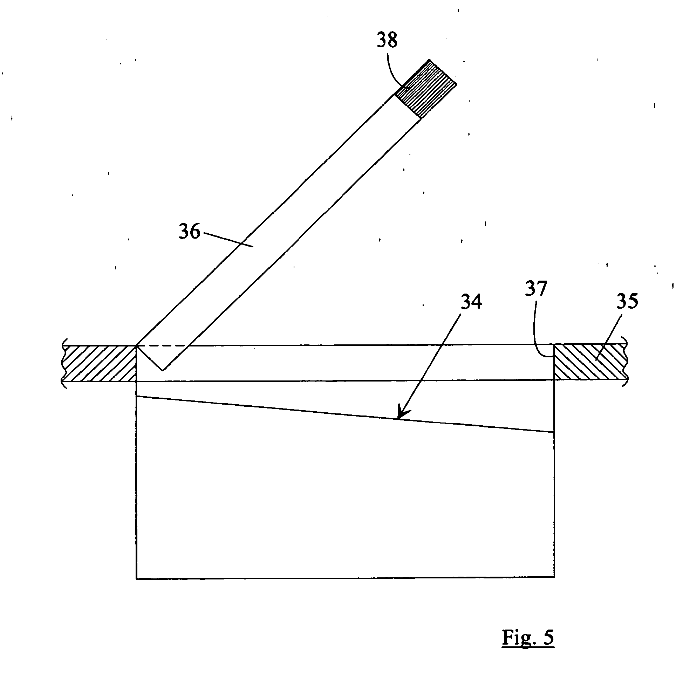

Einen alternativen Einbau eines Steckfeldes 34 fest unterhalb einer Tischplatte 35 zeigt Fig. 5 in einer seitlichen Darstellung. Das Steckfeld 34, entsprechend dem in der Fig. 3 dargestellten im Wesentlichen ausgebildet, ist durch eine von einer verschwenkbaren Platte 36 bis auf einen Spalt verschließbaren Ausnehmung 37 zugänglich. Der verbleibende Spalt wird durch plattenfeste Borsten 38 geschlossen, womit auch bei einer die Ausnehmung 37 schließenden Platte 36 Kabel durch den Spalt von dem Steckfeld 34 auf die Oberseite der Tischplatte 35 geführt werden können.

Bei einem erster Tisch 12 in einer Reihe der gleichartig ausgebildeten Tische 2 ist das Tischverbindungsmodul 7 ebenfalls über eine tischfeste Verkabelung 39 mit einer Technikbox 40 und diese wiederum mit einem Steckfeld 41 verbunden, wobei in Fig. 2 angedeutet ist, dass Technikbox 40 und Steckfeld 41 in einem Gehäuse zusammengefasst sein können.

In an sich bereits erläuterter Weise ist die Technikbox 40 weiter durch eine tischfeste Verkabelung 42 mit einem Verbindungsmodul 43 verbunden, dass den beschriebenen Tischverbindungsmodulen entspricht. Das Verbindungsmodul 43 ist für einen Anschluß 44 an ein externes Computernetz vorgesehen. Weiter wird über einen Audio Splitter 45 ein Anschluß 46 zur Verfügung gestellt für das Einspeisen externer und/oder den Ausgang interner Audiosignale in den die Computernetzwerksignale führenden ersten Bus 4.

Die VGA- und/oder Videosignale werden von dem Verbindungsmodul 43 über eine Leitung 47 an einen Seriell Manager 48 geführt, an dem für die Verwaltung ein Anschluß 49 für bspw. eine Funktastatur vorgesehen ist. Durch den Seriell Manager 48 werden weiter zumindest ein Anschluß 50 für VGA-und/oder Videosignale noch zur Verfügung gestellt.

Letztlich ist an dem Verbindungsmodul 43 noch ein Stromversorgungsanschluß 51 noch vorgesehen.

### Bezugszeichenliste:

- 1.: Konferenztischanordnung
- 2.: Tisch
- 3.: Steckfeld
- 4.: Bus
- 5.: Bus
- 6.: Technikbox
- 7.: Tischverbindungsmodul
- 8.: Tischverbindungsmodul
- 9.: Möbelseite
- 10.: Möbelseite
- 11.: Tischverbindungsmodul
- 12.: Tisch
- 13.: Kabel
- 14.: Kabel
- 15.: Kabel
- 16.: Verkabelung
- 17.: Verkabelung
- 18.: Verkabelung
- 19.: Steckfeld
- 20.: Steckdose
- 21.: Steckdose
- 22.: Anschluß
- 23.: Anschluß
- 24.: Anschluß
- 25.: Anschluß
- 26.: Anschluß
- 27.: Anschluß
- 28.: Beschriftung
- 29.: Beschriftung
- 30.: LED
- 31.: Platte
- 32.: Tischplatte
- 33.: Ausnehmung
- 34.: Steckfeld
- 35.: Tischplatte
- 36.: Platte
- 37.: Ausnehmung
- 38.: Borsten
- 39.: Verkabelung
- 40.: Technikbox
- 41.: Steckfeld
- 42.: Verkabelung
- 43.: Verbindungsmodul
- 44.: Anschluß
- 45.: Audio Splitter
- 46.: Anschluß
- 47.: Leitung
- 48.: Seriell Manager
- 49.: Anschluß
- 50.: Anschluß
- 51.: Stromversorgungsanschluß

### Bezugszeichenliste:

- 1.: Konferenztischanordnung
- 2.: Tisch
- 3.: Steckfeld
- 4.: Bus
- 5.: Bus
- 6.: Technikbox
- 7.: Tischverbindungsmodul
- 8.: Tischverbindungsmodul
- 9.: Möbelseite
- 10.: Möbelseite
- 11.: Tischverbindungsmodul
- 12.: Tisch
- 13.: Kabel
- 14.: Kabel
- 15.: Kabel
- 16.: Verkabelung
- 17.: Verkabelung
- 18.: Verkabelung
- 19.: Steckfeld
- 20.: Steckdose
- 21.: Steckdose
- 22.: Anschluß
- 23.: Anschluß
- 24.: Anschluß
- 25.: Anschluß
- 26.: Anschluß
- 27.: Anschluß
- 28.: Beschriftung
- 29.: Beschriftung
- 30.: LED
- 31.: Platte
- 32.: Tischplatte
- 33.: Ausnehmung
- 34.: Steckfeld
- 35.: Tischplatte
- 36.: Platte
- 37.: Ausnehmung
- 38.: Borsten
- 39.: Verkabelung
- 40.: Technikbox
- 41.: Steckfeld
- 42.: Verkabelung
- 43.: Verbindungsmodul
- 44.: Anschluß
- 45.: Audio Splitter
- 46.: Anschluß
- 47.: Leitung
- 48.: Seriell Manager
- 49.: Anschluß
- 50.: Anschluß
- 51.: Stromversorgungsanschluß

## Patentansprüche

1. Verfahren der Verkabelung von Vielzweckmöbeln, insbesondere Konferenztischen, **gekennzeichnet durch** die serielle Aufbereitung und die Übertragung von Audiosowie Computernetzwerksignalen über einen ersten und hiervon unabhängig von VGA- und Videosignale über einen zweiten Bus (4,5) von Möbel zu Möbel, wobei ein Einspeisen oder ein Ausgang der Audiosignale über einen Audio Splitter (45) eines ersten Möbels (12) und ein Einspeisen oder ein Ausgang der VGA- und/oder der Videosignale über einen Seriell Manager (48) des ersten Möbels (12) erfolgt.

2. Verfahren nach Anspruch 1, **dadurch gekennzeichnet, dass** zwischen zwei Möbeln (2,12) drei betriebsmäßig lösbare Kabel (13-15) für den ersten und den zweiten Bus (4,5) sowie eine Stromversorgung vorgesehen sind.

3. Verfahren nach einem oder mehreren der vorangehenden Ansprüche, **dadurch gekennzeichnet, dass** ein Möbel (2) mit einem Steckfeld (3) mit einer Steuervorrichtung (6) versehen ist, in der die Audio-, die Video-, die Computernetzwerk- sowie die VGA-Signale für einen Abgriff an dem Steckfeld (3) decodiert oder geschaltet werden.

4. Verfahren nach einem oder mehreren der vorangehenden Ansprüche, **dadurch gekennzeichnet, dass** das erste Möbel (12) mit Anschlüssen (46,44,50) für Audio-, Video-, Computernetzwerk- und VGA-Signale an externe Einrichtungen versehen ist und dass an dem Seriell Manager (48) eine Tastatur für eine Steuerung des Systems angeschlossen ist.

5. Kombinierbare Vielzweckmöbel, insbesondere Konferenztische, umfassend ein Möbel (2) und ein erstes Möbel (12) **dadurch gekennzeichnet, dass** an zwei benachbarten Möbelseiten jeweils ein Tischverbindungsmodul (7,11) vorgesehen ist, an welchen Tischverbindungsmodulen (7,11) betriebsmäßig lösbare erste und zweite Kabel (13,14) angeschlossen sind für eine Übertragung von seriell aufbereiteten Audio- und/oder Computernetzwerksignalen über das einen ersten Bus aufweisende erste Kabel (13) und hiervon unabhängig von VGA- und/oder von Videosignalen über das einen zweiten Bus aufweisende zweite Kabel (14) von Möbel zu Möbel, wobei ferner ein Audiosplitter (45) und ein Seriell Manager (48) vorgesehen sind und ein Einspeisen oder ein Ausgang der Audiosignale über den Audio Splitter (45) des ersten Möbels (12) und ein Einspeisen oder ein Ausgang der VGA-und/oder der videosignale über den Seriell Manager (48) des ersten Möbels (12) erfolgt.

6. Möbel nach Anspruch 5, **dadurch gekennzeichnet, dass** an den Tischverbindungsmodulen (7,11) ein betriebsmäßig lösbares Kabel (15) für eine Stromversorgung vorgesehen ist.

7. Möbel nach einem oder mehreren der vorangehenden Ansprüche 5 bis 6, **dadurch gekennzeichnet, dass** die Kabel zu einem Kabelbaum zusammengefasst sind.

8. Möbel nach einem oder mehreren der vorangehenden Ansprüche 5 bis 7, **dadurch gekennzeichnet, dass** die Kabel (13-15) über Steckerverbinder an den Tischverbindungsmodulen (7,11) angeschlossen sind, die unverwechselbar ausgebildet sind.

9. Möbel nach einem oder mehreren der vorangehenden Ansprüche 5 bis 8, **dadurch gekennzeichnet, dass** durch unterschiedliche Kabellängen ein unverwechselbarer Anschluß der Kabel erfolgt.

10. Möbel nach einem oder mehreren der vorangehenden Ansprüche 5 bis 9, dass an zwei gegenüberliegenden Möbelseiten (9.10) und/oder zwei Tischanschlussseiten eines Möbels (2) ein Tischverbindungsmodul (7,8) vorgesehen ist.

11. Möbel nach einem oder mehreren der vorangehenden Ansprüche 5 bis 10, **dadurch gekennzeichnet, dass** ein Steckfeld (19) für einen Abgriff der von dem Möbel eigenen Decodern und/oder Schaltern decodierten und/oder geschalteten Audio-, Video- und Computernetzwerk- und VGA-Signale vorgesehen ist und dass zumindest bei Nichtgebrauch das Steckfeld (19) unterhalb einer Tischplatte (32) versenkt angeordnet ist.

12. Möbel nach Anspruch 11, **dadurch gekennzeichnet, dass** das Steckfeld (19) wenigstens ein Paar von Anschlüssen (22-27) für jedes Signal aufweist.

13. Möbel nach einem oder mehreren der vorangehenden Ansprüche 10 bis 11, **dadurch gekennzeichnet, dass** das Steckfeld (19) wenigstens einen Anschluß (20,21) für eine Stromversorgung aufweist.

14. Möbel nach einem oder mehreren der vorangehenden Ansprüche 10 bis 13, **dadurch gekennzeichnet, dass** das Steckfeld (19) aus einem Glas oder einem klarsichtigen Kunststoff ist.

15. Möbel nach einem oder mehreren der vorangehenden Ansprüche 11 bis 14, **dadurch gekennzeichnet, dass** wenigstens die Anschlüsse (22-27) des Steckfelds (19) eine Beschriftung (28,29) aufweisen und dass die Beschriftung eine Laserinnengravur ist.

16. Möbel nach einem oder mehreren der vorangehenden Ansprüche 11 bis 15, **dadurch gekennzeichnet, dass** das Steckfeld (19) beleuchtet ist.

17. Möbel nach einem oder mehreren der vorangehenden Ansprüche 11 bis 16, **dadurch gekennzeichnet, dass** das Steckfeld (19) von randseitig verdeckt angeordneten LED's (30) beleuchtet ist.

18. Möbel nach einem oder mehreren der vorangehenden Ansprüche 11 bis 17, **dadurch gekennzeichnet, dass** das Steckfeld (19) in einer Nichtgebrauchslage unterhalb einer verschwenkbaren, eine Ausnehmung (33) in einer Tischplatte (32) schließenden Platte (31) angebunden ist und mit der Platte (31) aus der Nichtgebrauchslage unterhalb der Tischplatte (32) in eine Gebrauchslage oberhalb derselben verschwenkbar ist.

19. Möbel nach einem oder mehreren der vorangehenden Ansprüche 11 bis 17, **dadurch gekennzeichnet, dass** das Steckfeld (34) in einer Nichtgebrauchslage unterhalb einer verschwenkbaren, eine Ausnehmung (37) in einer Tischplatte (35) verschließenden Platte (36) angeordnet ist und nach Öffnen der Platte (36) zugänglich ist.

20. Möbel nach Anspruch 19, **dadurch gekennzeichnet, dass** die Platte (36) die Ausnehmung (37) bis auf einen Spalt verschließt und dass der Spalt von plattenfesten Borsten (38) geschlossen wird.

21. Möbel nach einem oder mehreren der vorangehenden Ansprüche 11 bis 20, **dadurch gekennzeichnet, dass** von dem Steckfeld (3) abgesetzt unterhalb der Tischplatte eine Technikbox (6) zur Aufnahme der möbeleigenen Decoder und/oder Schaltern vorgesehen ist.

22. Möbel nach einem oder mehreren der vorangehenden Ansprüche 5 bis 21, **gekennzeichnet durch** eine möbelfeste Verkabelung (16,17) zwischen den Tischanschlussmodulen (7,8) unter Einbindung der Technikbox (6).

23. Möbel nach einem oder mehreren der vorangehenden Ansprüche 5 bis 22, **gekennzeichnet durch** eine möbelfeste Verkabelung (18) zwischen der Technikbox (6) und dem Steckfeld (3).

24. Möbel nach einem oder mehreren der vorangehenden Ansprüche 22 bis 23, **dadurch gekennzeichnet, dass** eine möbelfeste Verkabelung wenigstens einerends mit betriebsmäßig lösbaren Steckerverbindern versehen ist.

25. Möbel nach einem oder mehreren der Ansprüche 5 bis 24, **dadurch gekennzeichnet, dass** das Verbindungsmodul (43) an den Seriell Manager (48) angeschlossen ist, dass der Seriell Manager (48) die VGA-Signale und/oder die Videosignale verwaltet und dass für die Steuerung an den Seriell Manager (48) eine Tastatur angeschlossen ist.

26. Möbel nach Anspruch 25, **dadurch gekennzeichnet, dass** die Tastatur eine Funktastatur ist.

27. Möbel nach einem oder mehreren der vorangehenden Ansprüche 5 bis 26, **dadurch gekennzeichnet, dass** das Verbindungsmodul (43) einen Stromversorgungsanschluß (51) aufweist.

## Claims

1. A method for wiring multi-purpose furniture, in particular conference tables, **characterized by** the serial processing and the transmission of audio as well as computer network signals via a first bus and, independent thereof, of VGA and video signals via a second bus (4, 5) from furniture to furniture, wherein an input or an output of the audio signals takes place via an audio splitter (45) of a first piece of furniture (12) and an input or an output of the VGA and/or of the video signals takes place via a serial manager (48) of the first piece of furniture (12).

2. The method according to claim 1, **characterized in that** provision is made between two pieces of furniture (2, 12) for three cables (13-15), which can be removed under normal operating conditions, for the first and for the second bus (4, 5) and provision is made for a power supply.

3. The method according to one or a plurality of the preceding claims, **characterized in that** a piece of furniture (2) comprising a patchpanel (3) is provided with a control device (6), in which the audio signals, the video signals, the computer network signals as well as the VGA signals are decoded or switched for a tapping at the patchpanel (3).

4. The method according to one or a plurality of the preceding claims, **characterized in that** the first piece of furniture (12) is provided with connections (46, 44, 50) for audio signals, video signals, computer network signals and VGA signals to external devices and that a key pad for controlling the system is connected to the serial manager (48).

5. Combinable multi-purpose furniture, in particular conference tables, comprising a piece of furniture (2) and a first piece of furniture (12), **characterized in that** provision is made in each case at two adjacent furniture sides for a table connecting module (7, 11), to which table connecting modules (7, 11) first and second cables (13, 14), which can be removed under normal operating conditions, are connected for the purpose of transmitting serially processed audio and/or computer network signals via the first cable (13), which encompasses a first bus, and, independent thereof, of VGA and/or of video signals via the second cable (14), which encompasses a second bus, from furniture to furniture, wherein provision is furthermore made for an audio splitter (45) and for a serial manager (48) and an input or an output of the audio signals takes place via the audio splitter (45) of the first piece of furniture (12) and an input or an output of the VGA and/or of the video signals takes place via the serial manager (48) of the first piece of furniture (12).

6. The furniture according to claim 5, **characterized in that** provision is made at the table connecting modules (7, 11) for a cable (15), which can be removed under normal operating conditions, for the purpose of supplying power.

7. The furniture according to one or a plurality of the preceding claims 5 to 6, **characterized in that** the cable are combined to form a cable harness.

8. The furniture according to one or a plurality of the preceding claims 5 to 7, **characterized in that** the cables (13-15) are connected via connector assemblies to the table connecting modules (7, 11), which are embodied so as to be distinctive.

9. The furniture according to one or a plurality of the preceding claims 5 to 8, **characterized in that** a distinctive connection of the cables takes place by means of different cable lengths.

10. The furniture according to one or a plurality of the preceding claims 5 to 9, **characterized in that** provision is made on two opposite furniture sides (9, 10) and/or on two table connecting sides of a piece of furniture (2) for a table connecting module (7, 8).

11. The furniture according to one or a plurality of the preceding claims 5 to 10, **characterized in that** provision is made for a patchpanel (19) for tapping the audio signals, video signals and computer network and VGA signals, which are decoded and/or switched by the decoders and/or switches of the furniture and that the patchpanel (19) is arranged underneath a table top (32), at least when not in use.

12. The furniture according to claim 11, **characterized in that** the patchpanel (19) encompasses at least one pair of connections (22-27) for each signal.

13. The furniture according to one or a plurality of the preceding claims 10 to 11, **characterized in that** the patchpanel (19) encompasses at least one connection (20, 21) for the purpose of supplying power.

14. The furniture according to one or a plurality of the preceding claims 10 to 13, **characterized in that** the patchpanel (19) consists of a glass or of a clear-sighted plastic.

15. The furniture according to one or a plurality of the preceding claims 11 to 14, **characterized in that** at least the connections (22-27) of the patchpanel (19) encompass an engraving (28, 29) and that the engraving is an inner laser engraving.

16. The furniture according to one or a plurality of the preceding claims 11 to 15, **characterized in that** the patchpanel (19) is illuminated.

17. The furniture according to one or a plurality of the preceding claims 11 to 16, **characterized in that** the patchpanel (19) is illuminated by LEDs, which are arranged so as to be covered on the edge.

18. The furniture according to one or a plurality of the preceding claims 11 to 17, **characterized in that** the patchpanel (19), when in non-operational position, is tied underneath a pivotable leaf (31), which closes a recess (33) in a table top (32) and **in that** said patch panel (19) can be pivoted with the leaf (31) from the non-operational position underneath the table top (32) into an operational position above said table top (32).

19. The furniture according to one or a plurality of the preceding claims 11 to 17, **characterized in that** the patchpanel (34), when in non-operational position, is arranged underneath a pivotable leaf (36), which closes a recess (37) in a table top (35) and **in that** said patchpanel (34) can be accessed after the leaf (36) has been opened.

20. The furniture according to claim 19, **characterized in that** the leaf (36) closes the recess (37) except for a gap and that the gap is closed by means of bristles (38), which are fixed to the leaf.

21. The furniture according to one or a plurality of the preceding claims 11 to 20, **characterized in that** provision is made underneath the table top offset from the patchpanel (3) for a media panel enclosure (6) for accommodating the decoders and/or the switches of the furniture.

22. The furniture according to one or a plurality of the preceding claims 5 to 21, **characterized by** a wiring (16, 17), which is fixed to the furniture, between the table connecting modules (7, 8) by means of integrating the media panel enclosure (6).

23. The furniture according to one or a plurality of the preceding claims 5 to 22, **characterized by** a wiring (18), which is fixed to the furniture, between the media panel enclosure (6) and the patchpanel (3).

24. The furniture according to one or a plurality of the preceding claims 22 to 23, **characterized in that** at least one end of a wiring, which is fixed to the furniture, is provided with connector assemblies, which can be removed under normal operating conditions.

25. The furniture according to one or a plurality of claims 5 to 24, **characterized in that** the connecting module (43) is connected to the serial manager (48), that the serial manager (48) manages the VGA signals and/or the video signals and that a key pad is connected to the serial manager (48) for the purpose of controlling.

26. The furniture according to claim 25, **characterized in that** the key pad is a radio key pad.

27. The furniture according to one or a plurality of the preceding claims 5 to 26, **characterized in that** the connecting module (43) encompasses a power supply connection (51).

## Revendications

1. Procédé de câblage de meubles polyvalents, en particulier de tables de conférence, **caractérisé par** le traitement en série et la transmission de signaux audio et de signaux de réseau informatique au moyen d'un premier bus et indépendamment de cela de signaux VGA et de signaux vidéo au moyen d'un second bus (4, 5) de meuble à meuble, une injection ou une sortie des signaux audio s'effectuant au moyen d'un Audio Splitter (45) d'un premier meuble (12) et une injection ou une sortie des signaux VGA et/ou des signaux vidéo s'effectuant au moyen d'un Seriell Manager (48) du premier meuble (12).

2. Procédé selon la revendication 1, **caractérisé en ce que** trois câbles (13-15) amovibles pendant le service sont prévus entre deux meubles (2, 12) pour le premier et le second bus (4, 5) ainsi que pour une alimentation électrique.

3. Procédé selon l'une quelconque ou plusieurs des revendications précédentes, **caractérisé en ce qu'**un meuble (2) est doté d'un panneau d'enfichage (3) avec un dispositif de commande (6), dans lequel les signaux audio, les signaux vidéo, les signaux de réseau informatique ainsi que les signaux VGA sont décodés ou commutés pour un prélèvement sur le panneau d'enfichage (3).

4. Procédé selon l'une quelconque ou plusieurs des revendications précédentes, **caractérisé en ce que** le premier meuble (12) est doté de branchements (46, 44, 50) pour des signaux audio, des signaux vidéo, des signaux de réseau informatique et des signaux VGA sur des dispositifs externes et **en ce qu'**un clavier pour une commande du système est raccordé au Seriell Manager (48).

5. Meubles polyvalents combinables, en particulier tables de conférence, comprenant un meuble (2) et un premier meuble (12), **caractérisés en ce que** sur chacun de deux côtés de meuble voisins est prévu un module de liaison de table (7, 11), modules de liaison de table (7, 11) sur lesquels sont raccordés des premiers et seconds câbles (13, 14) amovibles en service pour une transmission de signaux audio et/ou de signaux de réseau informatique traités en série par le premier câble (13) présentant un premier bus et indépendamment de cela de signaux VGA et/ou de signaux vidéo au moyen du second câble (14) présentant un second bus de meuble à meuble, un Audio Splitter (45) et un Seriell Manager (48) étant prévus également et une injection ou une sortie des signaux audio s'effectuant par le Audio Splitter (45) du premier meuble (12) et une injection ou une sortie des signaux VGA et/ou des signaux vidéo s'effectuant par le Seriell Manager (48) du premier meuble (12).

6. Meuble selon la revendication 5, **caractérisé en ce qu'**un câble (15) amovible pendant le service est prévu pour une alimentation électrique sur les modules de liaison de table (7, 11).

7. Meuble selon l'une quelconque ou plusieurs des revendications 5 à 6 précédentes, **caractérisé en ce que** les câbles sont regroupés en un faisceau de câbles.

8. Meuble selon l'une quelconque ou plusieurs des revendications 5 à 7 précédentes, **caractérisé en ce que** les câbles (13-15) sont raccordés au moyen de connecteurs à fiche aux modules de liaison de table (7, 11), qui sont conçus de façon non permutable.

9. Meuble selon l'une quelconque ou plusieurs des revendications 5 à 8 précédentes, **caractérisé en ce qu'**un raccordement des câbles non permutable s'effectue par des longueurs de câble différentes.

10. Meuble selon l'une quelconque ou plusieurs des revendications 5 à 9 précédentes, **caractérisé en ce qu'**un module de liaison de table (7, 8) est prévu sur deux côtés de meuble (9, 10) opposés et/ou deux côtés de raccordement de table d'un meuble (2).

11. Meuble selon l'une quelconque ou plusieurs des revendications 5 à 10 précédentes, **caractérisé en ce qu'**un panneau d'enfichage (19) est prévu pour un prélèvement des signaux audio, signaux vidéo et des signaux de réseau informatique et signaux VGA décodés et/ou commutés par des décodeurs et/ou interrupteurs propres au meuble et **en ce que** le panneau d'enfichage (19) est disposé de façon noyée au-dessous d'un plateau de table (32) au moins en cas de non-utilisation.

12. Meuble selon la revendication 11, **caractérisé en ce que** le panneau d'enfichage (19) présente au moins une paire de branchements (22-27) pour chaque signal.

13. Meuble selon l'une quelconque ou plusieurs des revendications 10 à 11 précédentes, **caractérisé en ce que** le panneau d'enfichage (19) présente au moins un branchement (20, 21) pour une alimentation électrique.

14. Meuble selon l'une quelconque ou plusieurs des revendications 10 à 13 précédentes, **caractérisé en ce que** le panneau d'enfichage (19) est à base d'un verre ou d'un plastique transparent.

15. Meuble selon l'une quelconque ou plusieurs des revendications 11 à 14 précédentes, **caractérisé en ce qu'**au moins les branchements (22-27) du panneau d'enfichage (19) présentent une inscription (28, 29) et **en ce que** l'inscription est une gravure intérieure au laser.

16. Meuble selon l'une quelconque ou plusieurs des revendications 11 à 15 précédentes, **caractérisé en ce que** le panneau d'enfichage (19) est éclairé.

17. Meuble selon l'une quelconque ou plusieurs des revendications 11 à 16 précédentes, **caractérisé en ce que** le panneau d'enfichage (19) est éclairé par des LED (30) disposées de façon masquée côté bord.

18. Meuble selon l'une quelconque ou plusieurs des revendications 11 à 17 précédentes, **caractérisé en ce que** le panneau d'enfichage (19) est rattaché dans une position de non-utilisation au-dessous d'une plaque (31) basculante et fermant un évidement (33) dans un plateau de table (32) et peut basculer avec la plaque (31) à partir de la position de non-utilisation au-dessous du plateau de table (32) dans une position d'utilisation au-dessus de ce plateau.

19. Meuble selon l'une quelconque ou plusieurs des revendications 11 à 17 précédentes, **caractérisé en ce que** le panneau d'enfichage (34) est disposé dans une position de non-utilisation au-dessous d'une plaque (36) basculante et fermant un évidement (37) dans un plateau de table (35) et est accessible après l'ouverture du plateau (36).

20. Meuble selon la revendication 19, **caractérisé en ce que** le plateau (36) ferme l'évidement (37) à l'exception d'une fente et **en ce que** la fente est fermée par des poils (38) fixés au plateau.

21. Meuble selon l'une quelconque ou plusieurs des revendications 11 à 20 précédentes, **caractérisé en ce que**, à l'écart du panneau d'enfichage (3) et au-dessous du plateau de table, il est prévu un boîtier technique (6) pour le logement des décodeurs et/ou interrupteurs propres au meuble.

22. Meuble selon l'une quelconque ou plusieurs des revendications 5 à 21 précédentes, **caractérisé par** un câblage (16, 17) solidaire du meuble entre les modules de raccordement de table (7, 8) avec l'intégration du boîtier technique (6).

23. Meuble selon l'une quelconque ou plusieurs des revendications 5 à 22 précédentes, **caractérisé par** un câblage (18) solidaire du meuble entre le boîtier technique (6) et le panneau d'enfichage (3).

24. Meuble selon l'une quelconque ou plusieurs des revendications 22 à 23 précédentes, **caractérisé en ce qu'**un câblage solidaire du meuble est doté au moins sur une extrémité de connecteurs à fiche amovibles pendant le service.

25. Meuble selon l'une quelconque ou plusieurs des revendications 5 à 24, **caractérisé en ce que** le module de liaison (43) est raccordé au Seriell Manager (48), **en ce que** le Seriell Manager (48) gère les signaux VGA et/ou les signaux vidéo et **en ce qu'**un clavier est raccordé au Seriell Manager (48) pour la commande.

26. Meuble selon la revendication 25, **caractérisé en ce que** le clavier est un clavier radio.

27. Meuble selon l'une quelconque ou plusieurs des revendications 5 à 26 précédentes, **caractérisé en ce que** le module de liaison (43) présente un raccordement d'alimentation électrique (51).
